Europäisches Patentamt

European Patent Office

Office européen des brevets

(11) Veröffentlichungsnummer: **0 560 098 A2**

## (12) EUROPÄISCHE PATENTANMELDUNG

(21) Anmeldenummer: **93102588.6**

(22) Anmeldetag: **19.02.93**

(51) Int. Cl.5: **H04L 27/34**

(30) Priorität: **13.03.92 DE 4208090**

(43) Veröffentlichungstag der Anmeldung:
**15.09.93 Patentblatt 93/37**

(84) Benannte Vertragsstaaten:
**FR IT NL SE**

(71) Anmelder: **ANT Nachrichtentechnik GmbH**
**Gerberstrasse 33**
**D-71522 Backnang(DE)**

(72) Erfinder: **Herbig, Peter, Dipl.-Ing.**
**Potsdamer Ring 32**
**W-7150 Backnang(DE)**

(54) **Verfahren zum Erzeugen von mehrdimensional trelliscodierten OAM-Signalen.**

(57) 2.1 Es sollen mehrdimensional trelliscodierte QAM-Signale erzeugt werden, welche eine Fehlererkennung- und korrektur und außerdem eine gegenüber Störungen robuste Trägerakqusition ermöglichen.

2.2 Jedes QAM-Signalsymbol wird aus mehreren Symbolen zusammengesetzt, von denen jedes einem anderen Symbolalphabet entnommen wird, wobei eines der Symbolalphabete, in der komplexen Ebene dargestellt, eine quadratische Form und die K (K = 1, 2, 3...) weiteren Symbolalphabete eine an einen Kreis angenäherte Form aufweisen.

Fig. 1

Die vorliegende Erfindung betrifft ein Verfahren zum Erzeugen von mehrdimensional trelliscodierten QAM-Signalen, wobei jedes QAM-Signalsymbol aus mehreren Symbolen zusammengesetzt wird, von denen jedes einem anderen Symbolalphabet entnommen wird.

Derartig zusammengesetzte mehrdimensionale trelliscodierte Signale sind in [1] IEEE Journal on Selected Areas in Communications, Vol. 7, No. 9, Dez. 1989, S. 1296-1306 beschrieben. Dabei werden die Symbole eines 8 PSK Symbolalphabets und die eines QPSK Symbolalphabets herangezogen. Mit einem solchen mehrdimensionalen trelliscodierten Signal soll eine möglichst robuste Trägersynchronisation im Empfänger erreicht werden.

Gemäß der Erfindung soll bei Datenübertragung über frequenzselektive Fadingkanäle nach einem Systemausfall - beispielsweise auf Grund zu starker Fadingverzerrungen - der Modulationsträger im Empfänger möglichst schnell und sicher wiedergewonnen werden. Um bei der Datenübertragung auch Fehler erkennen und korrigieren zu können, werden gemäß dem Stand der Technik trelliscodierte Signale übertragen, welche aus einem für die Codierung erforderlichen größeren Symbolvorrat zu entnehmen sind. Mehrdimensionale trelliscodierte Modulationsverfahren gehen aus einer Veröffentlichung [2] von G. Ungerböck in IEEE Communications Magazine, Febr. 1987, Vol. 25, No. 2, S. 5-21 hervor. Wenn im uncodierten Übertragungssystem Symbolalphabete mit Quadratform verwendet wurden, weichen die bei Anwendung der codierten Modulation einzusetzenden Symbolalphabete von der Quadratform ab und haben eine an einen Kreis angenäherte Form, weil eine kreisförmige Signalkonstellation einen geringeren mittleren Leistungsaufwand erfordert als z.B. ein quadratisches Symbolalphabet.

Der Erfindung liegt die Aufgabe zugrunde, für die Datenübertragung solche mehrdimensional trelliscodierte QAM-Signale zu verwenden, welche eine Fehlererkennung- und korrektur und außerdem eine gegenüber Störungen robuste Trägerakquisition ermöglichen.

Erfindungsgemäß wird diese Aufgabe durch die Merkmale des Anspruchs 1 gelöst.

Es ist für die Dimensionierung des Sendeverstärkers günstig, wenn die in beiden Arten (quadratisch, kreisförmig) von Symbolalphabeten vorkommenden maximalen Symbolamplituden gemäß Anspruch 2 nur wenig voneinander abweichen.

Dem Anspruch 3 ist zu entnehmen, daß für die Trägerakquisition im Empfänger nur die Symbole des quadratischen Symbolalphabets verwendet werden, weil dieses für die Trägerakquisition vorteilhaftere Eigenschaften besitzt als ein kreisförmiges Symbolalphabet.

Anhand eines in der Zeichnung dargestellten Ausführungsbeispiels wird nachfolgend die Erfindung näher erläutert.

Es zeigen:

Figur 1 ein Blockschaltbild eines Senders,

Figur 2 ein Teilungsschema für ein quadratisches 64-QAM Symbolalphabet,

Figur 3 ein Teilungsschema für ein kreisförmiges 128-QAM Symbolalphabet,

Figur 4 ein aus dem quadratischen 64-QAM und dem kreisförmigen 128-QAM Symbolalphabet zusammengesetztes 4-dimensionales Symbolalphabet,

Figur 5 einen Encoder und

Figur 6 ein Blockschaltbild eines Empfängers.

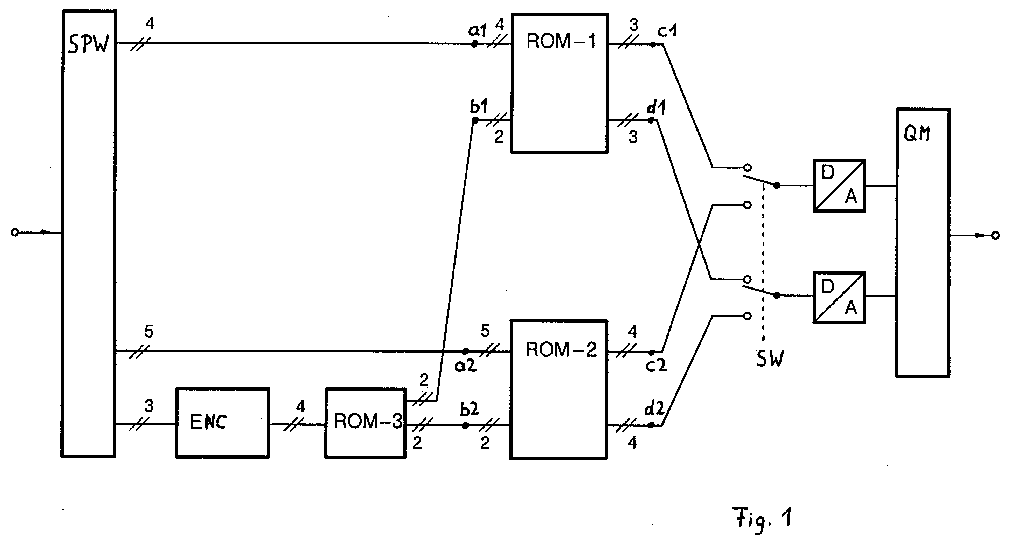

Der in Figur 1 dargestellte Sender ist beispielsweise so ausgeführt, daß er aus einem quadratischen 64-QAM-Symbolalphabet und einem kreisförmigen 128-QAM-Symbolalphabet ein 4-dimensional trelliscodiertes QAM-Signal bildet. Um ein Symbol aus dem quadratischen 64-Alphabet auszuwählen werden $M_1$ = ld (64) = 6 Bit benötigt und für die Auswahl eines Symbols aus dem kreisförmigen 128-Alphabet benötigt man $M_2$ = ld (128) = 7 Bit. Da gemäß diesem Ausführungsbeispiel also für jedes 4-dimensionale Symbol jeweils zwei 2-dimensionale Symbole - aus jedem der beiden Symbolalphabete eines - gleichzeitig erfaßt werden, sind für jeden ein 4-dimensionales Symbol bildenden Arbeitsschritt $M_1$ + $M_2$ = 13 Bit erforderlich, mit denen der QAM-Modulator QM des Senders anzusteuern ist. Im allgemeinen Fall ohne Beschränkung auf das zuvor angeführte Beispiel gilt: Bei 2K-Dimensionaler Trelliscodierung (K = 1,2,3...) werden K 2-dimensionale Symbole gleichzeitig codiert und der QAM-Modulator ist dann mit $M_1$ + ... + $M_k$ + ... $M_k$ = $M_s$ Bits anzusteuern, wobei $M_k$ bei Anzahl von Bits darstellt, die notwendig ist, um genau ein Symbol aus dem k-ten Symbolalphabet auszuwählen. Entsprechend den Ausführungen in der obengenannten Veröffentlichung [2] von G. Ungerböck reduziert sich ausgehend von dem Wert $M_s$ die Anzahl der in einem Schritt zu codierenden Bits um 1 Bit. Übertragen auf das Ausführungsbeispiel (Fig. 1), sind es (13-1) Bit = 12 Bit. Diese 12 Bit erscheinen am Ausgang eines Serien/Parallel-Wandlers SPW, der einen seriellen Bitstrom insgesamt in z.B. drei Bitgruppen aufteilt, von denen einen Gruppe 3 Bit, eine zweite Gruppe 4 Bit und eine dritte Gruppe 5 Bit aufweist. Die Anzahl der Bitgruppen ist von der Dimensionierung der Trelliscodierung abhängig. Allgemein gesagt, gibt es zunächst für je zwei Dimensionen eine Bitgruppe, also insgesamt K Gruppen. Jede dieser K Bitgruppen ist direkt und ohne Codierung mit einem von K Speichern ROM-k (k1...K) verbunden und unmittelbar an der Auswahl eines Symbols aus dem im zugehörigen Speicher abgelegten Symbolalphabet beteiligt. Der k-te Speicher ROM-k enthält also das komplette k-te Symbolalphabet, wobei unter der einem jedem Symbol entsprechenden Adresse im Speicher zwei digitale Ansteuersignale abgespeichert sind, von denen das eine der Inphase- und das andere der Quadraterphasensignalkomponente des jeweiligen Symbols entspricht. Diese zwei digitalen Mustersignale je Symbol werden nach einer Digital/Analog-Umsetzung dem QAM-Modulator zugeführt.

Gegenstand der vorliegenden Erfindung ist, wie einleitend dargelegt, die Kombination eines für die im Empfänger stattfindende Trägerakquisition günstigen quadratischen Symbolalphabetes und mindestens eines weiteren energiegünstigen kreisähnlichen Symbolalphabetes. Bei einer Ausführung, für die der in Fig. 1 dargestellte Sender ausgelegt ist, ist ein quadratisches Symbolalphabet mit 64 Symbolen (kurz als 64-SQUARE Alphabet bezeichnet) in einem ersten Speicher ROM-1 und nur ein weiteres kreisähnliches Symbolalphabet mit 128 Symbolen (kurz als 128-CROSS Alphabet bezeichnet) in einem zweiten Speicher ROM-2 abgespeichert.

Damit keine Systemresourcen verschenkt werden, sollten beide Symbolalphabete in etwa die gleiche maximale Ansteuergrenze haben, das heißt, die in den Symbolalphabeten vorkommenden maximalen Amplituden der am äußersten Rand liegenden Symbole sollten möglichst wenig voneinander abweichen. Das quadratische Symbolalphabet liegt dann vollständig innerhalb des kreisförmigen und enthält somit weniger Symbole als das kreisförmige Symbolalphabet.

Vom Serien/Parallel/Wandler SPW gehen an die Eingänge a1 des ersten Speichers ROM-1, in dem das 64-SQUARE Alphabet abgelegt ist, 4 Datenleitungen und an die Eingänge a2 des zweiten Speichers ROM-2, in dem das 128-CROSS Alphabet abgelegt ist, 5 Datenleitungen. Die dritte Bitgruppe mit 3 Bits ist über drei Datenleitungen einem Encoder ENC zugeführt. Die Anzahl der Eingangsbits für den Encoder mit m; im Ausführungsbeispiel ist m = 3. m ist ein Dimensionierungsparameter, der in erster Linie vom geforderten Codierungsgewinn abhängt - mit steigendem Codierungsgewinn nimmt der schaltungstechnische Aufwand für den Encoder zu. Die m + 1 (im Ausführungsbeispiel m + 1 = 4) Ausgangsbits des Encoders müssen allerdings ein ganzzahliges Vielfaches von K, der Anzahl der verwendeten Symbolalphabete, sein, denn sie werden ebenfalls für die Auswahl der Symbole in den einzelnen Symbolalphabeten herangezogen. Ein dem Encoder nachgeschalteter Speicher (im Ausführungsbeispiel: ROM-3) bewirkt die Aufspaltung der codierten (m + 1) Bits des Encoders auf die Symbolalphabet-Speicher ROM-k (im Ausführungsbeispiel: ROM-1, ROM-2).

Wie den obengenannten Druckschriften [1] und [2] zu entnehmen ist, wird durch mehrstufige Teilung (set partitioning genannt) der Symbolalphabete eine Erhöhung der Symboldistanz erreicht, um die Störungsanfälligkeit des Datenübertragungssystem zu verringern. Die für die Teilung notwendigen Verknüpfungsoperationen enthält der dem Encoder nachgeschaltete Speicher.

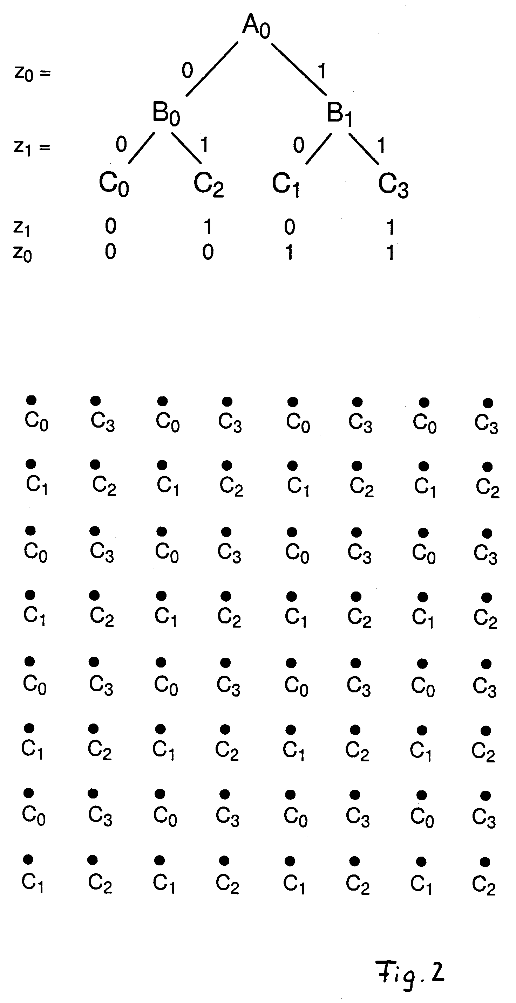

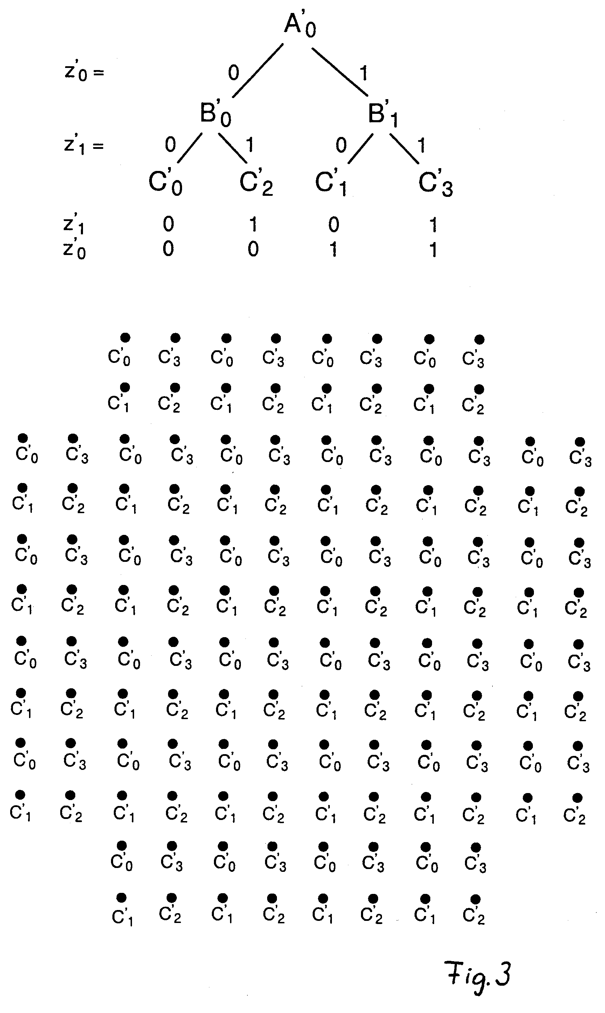

Die nach dem Prinzip des "set partitioning" entstandenen Teilungsschemata für das 64-SQUARE Alphabets und für das 128-CROSS Alphabet sind in den Fig. 2 und 3 skizziert. Die Mengen $A_o$ bzw. $A'_o$ enthalten jeweils sämtliche Symbole des 64-SQUARE Alphabets bzw. des 128-CROSS Alphabets. Nach einem ersten Teilungsschritt entstehen die Symbolteilmengen $B_o$ bzw. $B'_o$; und nach einem zweiten Teilungsschritt erhält man die Symbolteilmengen $C_o$, $C_1$, $C_2$, $C_3$ bzw. $C'_o$; $C'_1$, $C'_2$, $C'_3$. In den beiden Figuren 2 und 3 ist auch dargestellt, zu welcher der Teilmengen jedes einzelne Symbol (durch • in der komplexen Ebene gekennzeichnet) gehört.

Gemäß den Regeln der codierten Modulation (vgl. [2]) erfolgt die Wahl der Teilmenge, aus dem ein Sendesymbol ausgesucht werden soll, codiert, und die Wahl des genauen Sendesymbols innerhalb dieser Teilmenge uncodiert. Mit den in Figur 1 für die Wahl der Teilmenge vorgesehenen, an den Eingängen b1 und b2 der Speicher ROM-1 und ROM-2 anliegenden 2 Bit lassen sich genau 4 Teilmengen unterscheiden. Jede Teilmenge $C_i$ (i = 0,1,2,3) des 64-SQUARE Alphabets enthält noch 16 Symbole. Um eines von diesen 16 Symbolen herauszusuchen, benötigt man a4 Bit, die an den Eingängen a1 des ersten Speichers ROM-1 zur Verfügung stehen. Beim 128-CROSS Alphabet enthält jede Teilmenge $C'_i$ 32 Symbole. Für die uncodierte Auswahl eines der 32 Symbole sind 5 Bit erforderlich, welche an den Eingängen b2 des zweiten Speichers ROM-2 anliegen. In Figur 2 und 3 sind mit $z_0$, $z_1$ und $z'_0$, $z'_1$ die die Teilmengen kennzeichnenden Bits angegeben.

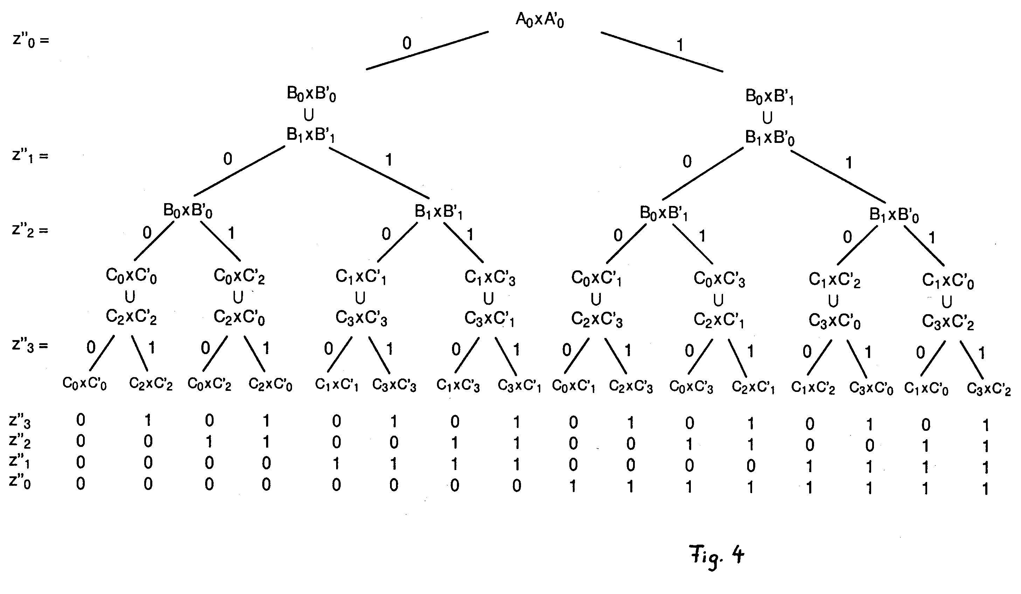

Die Verknüpfung der beiden 2-dimensionalen Teilungsschemata des 64-SQUARE Alphabets und des 128-CROSS Alphabets zu einem 4-dimensionalen Teilungsschema zeigt die Figur 4. Die 4 Bits $z''_o$, $z''_1$, $z''_2$, $z''_3$, kennzeichnen die 16 Verknüpfungsteilmengen $C_i \times C'_j$ (i,j, = 0,1,2,3): Zur Auswahl der Teilmengen $C_i$ und $C'_j$ in den Speichern ROM-1 und ROM-2 dient die folgende im Speicher ROM-3 abgelegte Zuordnungstabelle.

| $z''_3\, z''_2\, z''_1\, z''_0$ | $z_1\, z_0$ | $z'_1\, z'_0$ |
|---|---|---|
| 0000 $(C_0 \times C'_0)$ | 00 $(C_0)$ | 00 $(C'_0)$ |
| 0001 $(C_0 \times C'_1)$ | 00 $(C_0)$ | 01 $(C'_1)$ |
| 0010 $(C_1 \times C'_1)$ | 01 $(C_1)$ | 01 $(C'_1)$ |
| 0011 $(C_1 \times C'_2)$ | 01 $(C_1)$ | 10 $(C'_2)$ |
| 0100 $(C_0 \times C'_2)$ | 00 $(C_0)$ | 10 $(C'_2)$ |
| 0101 $(C_0 \times C'_3)$ | 00 $(C_0)$ | 11 $(C'_3)$ |
| 0110 $(C_1 \times C'_3)$ | 01 $(C_1)$ | 11 $(C'_3)$ |
| 0111 $(C_1 \times C'_0)$ | 01 $(C_1)$ | 00 $(C'_0)$ |
| 1000 $(C_2 \times C'_2)$ | 10 $(C_2)$ | 10 $(C'_2)$ |
| 1001 $(C_2 \times C'_3)$ | 10 $(C_2)$ | 11 $(C'_3)$ |
| 1010 $(C_3 \times C'_3)$ | 11 $(C_3)$ | 11 $(C'_3)$ |
| 1011 $(C_3 \times C'_0)$ | 11 $(C_3)$ | 00 $(C'_0)$ |
| 1100 $(C_2 \times C'_0)$ | 10 $(C_2)$ | 00 $(C'_0)$ |
| 1101 $(C_2 \times C'_1)$ | 10 $(C_2)$ | 01 $(C'_1)$ |
| 1110 $(C_3 \times C'_1)$ | 11 $(C_3)$ | 01 $(C'_1)$ |
| 1111 $(C_3 \times C'_2)$ | 11 $(C_3)$ | 10 $(C'_2)$ |

$z''_0$, $z''_1$, $z''_2$, $z''_3$ sind die Ausgangsbits des Encoders ENC, $z_0$, $z_1$ sind die vom Speicher ROM ausgegebenen und den Eingängen b1 des ersten Speichers ROM-1 zugeführten Bits, und $z'_0$, $z'_1$ sind die vom Speicher ROM an die Eingänge b2 des zweiten Speichers ROM-2 gelangenden Bits.

Die Ausgänge C1; d1 und C2, d2 der Speicher ROM-1 und ROM-2 werden von Schaltern SW wechselweise auf Digital/Analog-Umsetzer DA geschaltet und die analogen Inphase-und Quadraturphase-Signalkomponenten der Symbole dem QAM-Modulator QM zugeführt.

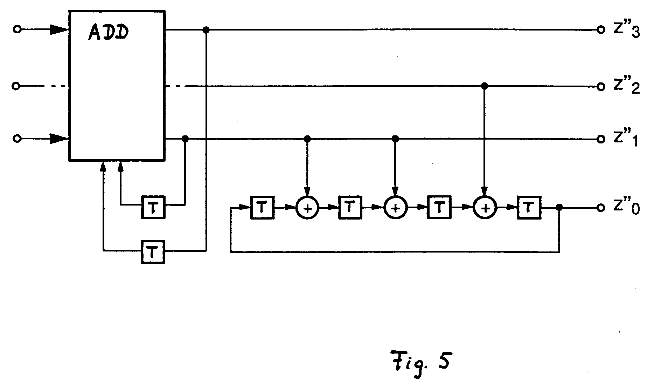

Ein mögliches Beispiel eines für 4-dimensionale Telliscodierung geeigneten Encoders ENC zeigt Fig. 5. Dieser aus der eingangs genannten Literatur [2] bekannte Encoder kennt 16 verschiedene innere Zustände und erzielt einen asymptotischen Codierungsgewinn von ≈ 4.5 dB. Es ist aus [2] auch bekannt, daß es für 4-dimensionale Trelliscodierung lineare Encoder gibt, bei welchen Signalrotationen um Vielfache vom 90° während der Übertragung keine weiteren Störungen verursachen. Der Encoder in Fig. 5 besitzt diese Eigenschaft und benötigt deshalb eine differentielle Vorcodierung in Gestalt eines binären modulo-4-Addierers ADD. Die Vorcodierung betrifft in diesem Fall die Codebits $z''_3$ und $z''_1$. Dies ist eine Folge des Teilungsschemas nach Fig. 4 und ergibt sich aus der Überlegung wie sich bei einer Rotation der Sendesymbole die Zuordnung der Codebits $z''_3$, $z''_2$, $z''_1$, $z''_0$

ändert.

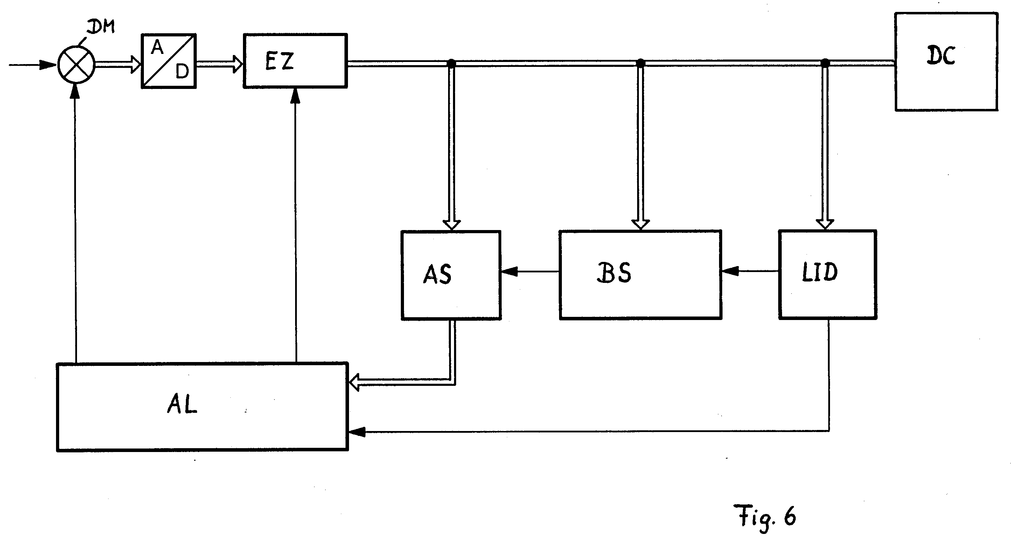

Ein Blockschaltbild eines für den Empfang mehrdimensionaler trelliscodierter -QAM-Signale der zuvor beschriebenen Art geeigneten Empfängers zeigt Fig. 6. Der Empfänger besitzt üblicherweise einen Demodulator DM, einen Analog/Digital-Umsetzer AD, der das analoge demodulierte Empfangssignal digitalisiert, und einen digitalen Entzerrer EZ.

Der Empfänger kennt zwei verschiedene Betriebszustände, den 'akquisition mode' während der Akquisitionsphase und den 'tracking mode' während der normalen Empfangsphase mit eingerasteten Regelkreisen für die Trägerphase und die Entzerrerkoeffizienten. Diese Betriebszustände werden von einem Lock-In Detektor LID definiert, der dazu die Entzerrerausgangssignale beobachtet.

Abhängig vom Betriebszustand ist die Recheneinheit AL in der Lage, verschiedene Algorithmen zur Adaption der Trägerphase und der Entzerrerkoeffizienten zu Grunde zu legen. Die Information, welcher Betriebszustand gerade vorliegt, erhält sie vom Lock-In Detektor LID.

Da während der Akquisitionsphase nur die Symbole aus dem quadratischen Symbolalphabet zu berücksichtigen sind, muß eine Auswahlschaltung genau diese Sendesymbole aussortieren und die anderen unterdrücken. Die Auswahlschaltung bekommt dazu ein Signal von der Blocksynchronisation BS, welche die Aufgabe hat, diejenigen Zeitfenster zu erkennen, in welchen die Symbole aus dem quadratischen Symbolalphabet empfangen werden. Die Symbole aus diesem Zeitfenster werden dann von der Auswahlschaltung an die Recheneinheit AL weitergereicht. Da sich der "akquisition mode" dadurch auszeichnet, daß die Trägerableitung und der Entzerrer eben noch nicht eingerastet sind, muß die Blocksynchronisierung sehr unempfindlich sein gegenüber Rotationen und Verzerrungen des Empfangssignals. Dem Entzerrer ist ein Decoder DC nachgeschaltet, um aus dem Entzerrerausgangssignal die ursprünglichen Quellendaten wiederzugewinnen. In der Regel wird dazu der Viterbi Algorithmus verwendet, dies ist aber nicht mehr Gegenstand dieser Erfindung.

**Patentansprüche**

1. Verfahren zum Erzeugen von mehrdimensional trelliscodierten quadraturamplitudenmodulierten (QAM) Signalen, wobei jedes QAM-Signalsymbol aus mehreren Symbolen zusammengesetzt wird, von denen jedes einem anderen Symbolalphabet entnommen wird, dadurch gekennzeichnet, daß eines der Symbolalphabete, in der komplexen Ebene dargestellt, eine quadratische Form und die K (K = 1,2,3...) weiteren Symbolalphabete eine an einen Kreis angenäherte Form aufweisen.

2. Verfahren nach Anspruch 1, dadurch gekennzeichnet, daß im quadratischen Symbolalphabet die am äußeren Rand liegenden Symbole mit ihren Amplituden möglichst wenig von den Amplituden der am äußersten Rand des (der) kreisförmigen Symbolalphabet(e) befindlichen Symbole abweichen.

3. Empfänger für nach Anspruch 1 oder 2 erzeugte mehrdimensional trelliscodierte QAM-Signale, dadurch gekennzeichnet, daß er Schaltungsmittel (BS) aufweist, welche aus einer empfangenen QAM-Signalsymbolfolge jeweils die Signale des quadratischen Symbolalphabetes selektieren, um sie für Akquisitionsvorgänge im Empfänger zu verwenden.

Fig. 1

Fig. 2

$A'_0$

$z'_0 =$   0     1

$B'_0$        $B'_1$

$z'_1 =$   0   1      0   1

$C'_0$   $C'_2$   $C'_1$   $C'_3$

$z'_1$    0      1      0      1
$z'_0$    0      0      1      1

Fig.3

EP 0 560 098 A2

$z''_0 =$

$A_0 \times A'_0$

0     1

$z''_1 =$

$B_0 \times B'_0$
$\cup$
$B_1 \times B'_1$

$B_0 \times B'_1$
$\cup$
$B_1 \times B'_0$

0    1      0    1

$z''_2 =$

$B_0 \times B'_0$     $B_1 \times B'_1$     $B_0 \times B'_1$     $B_1 \times B'_0$

0   1    0   1    0   1    0   1

$C_0 \times C'_0$   $C_0 \times C'_2$   $C_1 \times C'_1$   $C_1 \times C'_3$   $C_0 \times C'_1$   $C_0 \times C'_3$   $C_1 \times C'_2$   $C_1 \times C'_0$
$\cup$     $\cup$     $\cup$     $\cup$     $\cup$     $\cup$     $\cup$     $\cup$
$C_2 \times C'_2$   $C_2 \times C'_0$   $C_3 \times C'_3$   $C_3 \times C'_1$   $C_2 \times C'_3$   $C_2 \times C'_1$   $C_3 \times C'_0$   $C_3 \times C'_2$

$z''_3 =$   0 / 1   0 / 1   0 / 1   0 / 1   0 / 1   0 / 1   0 / 1   0 / 1

$C_0 \times C'_0$   $C_2 \times C'_2$   $C_0 \times C'_2$   $C_2 \times C'_0$   $C_1 \times C'_1$   $C_3 \times C'_3$   $C_1 \times C'_3$   $C_3 \times C'_1$   $C_0 \times C'_1$   $C_2 \times C'_3$   $C_0 \times C'_3$   $C_2 \times C'_1$   $C_1 \times C'_2$   $C_3 \times C'_0$   $C_1 \times C'_0$   $C_3 \times C'_2$

| | | | | | | | | | | | | | | | | |
|---|---|---|---|---|---|---|---|---|---|---|---|---|---|---|---|---|
| $z''_3$ | 0 | 1 | 0 | 1 | 0 | 1 | 0 | 1 | 0 | 1 | 0 | 1 | 0 | 1 | 0 | 1 |
| $z''_2$ | 0 | 0 | 1 | 1 | 0 | 0 | 1 | 1 | 0 | 0 | 1 | 1 | 0 | 0 | 1 | 1 |
| $z''_1$ | 0 | 0 | 0 | 0 | 1 | 1 | 1 | 1 | 0 | 0 | 0 | 0 | 1 | 1 | 1 | 1 |
| $z''_0$ | 0 | 0 | 0 | 0 | 0 | 0 | 0 | 0 | 1 | 1 | 1 | 1 | 1 | 1 | 1 | 1 |

Fig. 4

Fig. 5

Fig. 6

EP 0 560 098 A2